# EUROPEAN PATENT SPECIFICATION

(11) **EP 0 613 867 B1**
(45) Date of publication and mention of the grant of the patent: **21.05.1997**
(21) Application number: 94300839.1
(22) Date of filing: 04.02.1994
(51) Int. Cl.: C04B 7/24, C04B 7/43, F23G 7/00

(54) **Method for manufacturing a pozzolanic material from paper sludge**
Verfahren zur Herstellung eines Puzzolanmaterials aus Papierschlamm
Procédé pour la fabrication d'un matériau pouzzolanique à partir de boues de papeterie

(30) Priority: 26.02.1993 DK 214/93
(43) Date of publication of application: 07.09.1994
(73) Proprietor: F.L. Smidth & Co. A/S, DK-2500 Valby, Copenhagen (DK)
(72) Inventor: Hundebol, Soren, DK-2500 Valby (DK)
(74) Representative: Jackson, Peter Arthur

(56) References cited:
- EP-A- 0 488 989
- DE-A- 3 523 677
- FR-A- 1 362 956
- GB-A- 173 504
- US-A- 3 858 535
- RESEARCH DISCLOSURE no. 345 , January 1993 , HAVANT GB pages 59 - 60 XP336546 'Plant for processing of waste for firing into a kiln system'

## Description

The present invention relates to a method for manufacturing a pozzolanic material from paper sludge, for example derived from the manufacture of recycled paper, in a plant comprising a drying and comminuting apparatus and a kiln system.

In this context, a pozzolanic material is taken to mean a material of oxides such as Al₂O₃, Fe₂O₃, SiO₂, which when incorporated into mortar or concrete may react with Ca(OH)₂ with the formation of minerals equivalent to those formed when ordinary cement minerals react with water. The two most important cement minerals (CaO)₃SiO₂ and (CaO)₂SiO₂ both react with water with formation of tobermorite-gel and Ca(OH)₂. When a pozzolanic material is incorporated into concrete, it is possible to reduce the consumption of cement quite substantially because of these factors, if attainment of the same strength characteristics is desired.

The manufacture of recycled paper based on the use of waste paper as the chief raw material generates large quantities of waste in the form of paper sludge. This paper sludge consists mainly of cellulosic fibres, printing ink, water and a mineral residue of paper fillers, and it is thought to be biodegradable. Nevertheless, the method of deposit which has been employed in the past, involving simple ploughing in of the paper sludge, is a matter of growing concern. Therefore, the emergence of paper sludge generated during the manufacture of recycled paper precludes utilization of the entire amount of recovered waste paper, which is undesirable, since from an ecological viewpoint it is preferable to manufacture paper from reclaimed material instead of from wood pulp.

Several methods have been proposed for utilizing paper sludge in the manufacture of cement in such a way that the cellulosic fibres and the printing ink are incinerated in the kiln system of the cement plant, whereas the mineral content is mixed into the cement clinker in the same manner as coal ash. In, for example, Japanese laid open patent application JP-A-56100222, a method is disclosed according to which the paper sludge is initially dehydrated by mechanical means, the produced sludge is subsequently dried and granulated, and the granulate is eventually used as a fuel in a cement kiln. In Danish laid open patent application No. 2829/90 filed on November 29, 1990, a method is suggested by which the paper sludge is mixed into the cement raw materials in a suspension which is subsequently passed to a rotary kiln operating according to the wet-process method. The suggested solutions in both patent applications have the disadvantage that the paper sludge, of which 50% is water and 25% is a burnable substance, have to be transported from the paper mill to the cement plant, which is disadvantageous in terms of cost efficiency. Further, the paper sludge is difficult to handle and is often malodorous.

Possibly, the most obvious method envisaged by a specialist by which a pozzolanic material can be manufactured from paper sludge would be to carry out the process in a long rotary kiln, with firing being effected at one end, whereas the wet paper sludge is introduced at the other end, and subjected to drying and heating in counterflow with the kiln gases. The disadvantage of this solution is that malodorous gas compounds may be developed from the paper sludge already at the drying stage of the sludge or very early during the heat-up phase, which entails that these gases are discharged from the rotary kiln together with the exit gas without having been effectively destroyed. In addition to this environmental problem, the solution has the disadvantage that fuel, e.g. gas or oil, will be required for firing.

Another conceivable solution would be to utilize a traditional waste incineration plant provided with a grate. In such a plant it is possible to attain effective destruction of the generated gases and to reduce the usage of back-up fuel. However, this disadvantage of this solution is that it is difficult to achieve effective removal of the burnable carbon from the pozzolanic product, either because it is extremely difficult to maintain the fine-grained product on the grate for the sufficient length of time or due to the proneness of the material to form large lump formations in which the carbon is trapped.

It is the object of the present invention to provide a method for manufacturing a pozzolanic material from paper sludge by means of which the aforementioned disadvantages are remedied.

This is achieved according to the invention, in a plant comprising a drying and comminuting apparatus and a kiln system, by a method wherein the paper sludge is introduced into a stream of hot exit gas from the kiln system of the plant and is passed together with the gas to the drying and comminuting apparatus wherefrom dried and finely divided paper material is passed suspended in the exit gas to a separator in which the paper material is separated from the exit gas; in that the separated, dry paper material is fed into a burning chamber of the kiln system where the organic matter of the material is incinerated with the development of heat, by means of which the mineral residue is subjected to heat treatment for an appropriate period of time and at a controlled temperature of up to between 700 and 850°C; and in that the heat-treated mineral material is eventually cooled in a cooler.

It is thus obtained that the primarily kaolinic, inorganic fraction of the paper sludge is transformed into a material with pozzolanic properties, which can be used as an additive for preparation of e.g. concrete, which will thereby obtain enhanced strength characteristics and increased density. The fact that burnt clays, including heat-treated kaolin, possesses pozzolanic properties has been recognized and utilized from antiquity (see e.g. Lea & Desch: The Chemistry of Cement and Concrete, Edward Arnold & Co., London, 1935, p. 249). Since the plant to be used according to the invention can be sited near the paper mill from which the paper sludge is derived, this may further eliminate the need for a potentially long and expensive transportation of the paper sludge to a cement plant. The pozzolanic material manufactured by the method according to the invention has a weight which is only about 25% that of the paper sludge, and, therefore, it can be transported directly to a concrete factory or a building site in a less expensive manner.

The manufacturing process according to the invention is furthermore CO₂-neutral in itself since the amount of CO₂ which is formed during the incineration of the organic matter of the paper sludge is equivalent to the amount which would be formed by biological degradation in connection with ploughing in. It is further obtained that the CO₂-emission resulting from the use of concrete is reduced since the total amount of cement which is to be burned per tonne of finished concrete is reduced when the pozzolanic material is utilized as an additive in the concrete.

Finally, it is obtained that a greater amount of waste paper than hitherto can be utilized for the manufacture of new paper, without any attendant deposit problems.

The dry paper material which is separated from the exit gas in the separator can be fed directly into the burning chamber of the kiln system, but in order to obtain an effective and controlled firing it is preferred that the paper material from the separator is initially passed to a storage vessel, from which it is subsequently extracted and fed into the burning chamber of the kiln system.

In one example of the method according to the invention the paper material is fed via a burner installation into a rotary kiln for formation of a flame herein, whereby the organic matter of the material is incinerated with the development of heat and the mineral residue is precipitated in the rotary kiln, whereas the exit gas produced during the incineration is passed to a dust separator in which mineral dust is separated and returned to the rotary kiln, and the returned dust together with the remaining mineral material in the rotary kiln is, by virtue of the rotation of the kiln, led along below the flame and thereby subjected to heat treatment under controlled conditions, the heat-treated mineral material being subsequently conducted to the cooler.

In a second example of the method according to the invention the paper material is fed into a calciner via a burner which is situated close to a bottom inlet of the calciner up through which combustion air is supplied, whereby the organic matter of the material is incinerated subject to development of heat, and the mineral residue is subjected to heat treatment, whereafter the heat-treated mineral material suspended in the combustion gas is passed to a separator in which it is separated from the gas and conducted to the cooler.

The mineral, heat-treated material can be cooled by means of cooling air which is subsequently utilized as combustion air in the kiln system.

The exit gas utilized for drying may be malodorous and may contain various harmful organic elements, and, therefore, it may be recirculated via a fan to the kiln system of the plant in which, together with fresh air, it is first passed through the cooler in order to cool the material and then passed through the burning chamber, whereby the unwanted substances in the exit gas are destroyed.

There will be a constant need for supplying the plant with fresh air from external sources, and since, during normal operation, the plant will be heat-producing, a partial stream of the hot exit gas from the kiln system is extracted at a rate which is equivalent to the input of fresh air and conducted to a plant for waste heat utilization.

The extracted exit gas may subsequently be cleaned in a precipitator installation from which the dust is returned to the kiln system, while the cleaned exit gas is vented into the atmosphere via a fan.

The invention also includes apparatus for carrying out the new method the apparatus comprising a kiln system; and means for introducing paper sludge into a hot exit gas duct from the kiln system, the duct leading to a drying and communiting apparatus and hence to a separator, a material outlet from the separator leading to a burning chamber of the kiln system, and a material outlet of the kiln system being connected to a cooler.

The invention will now be described in further detail with reference to the accompanying diagrammatical drawings, in which:
Fig. 1 shows a first plant for carrying out the method according to the invention, and
Fig. 2 shows a second plant for carrying out the method according to the invention.

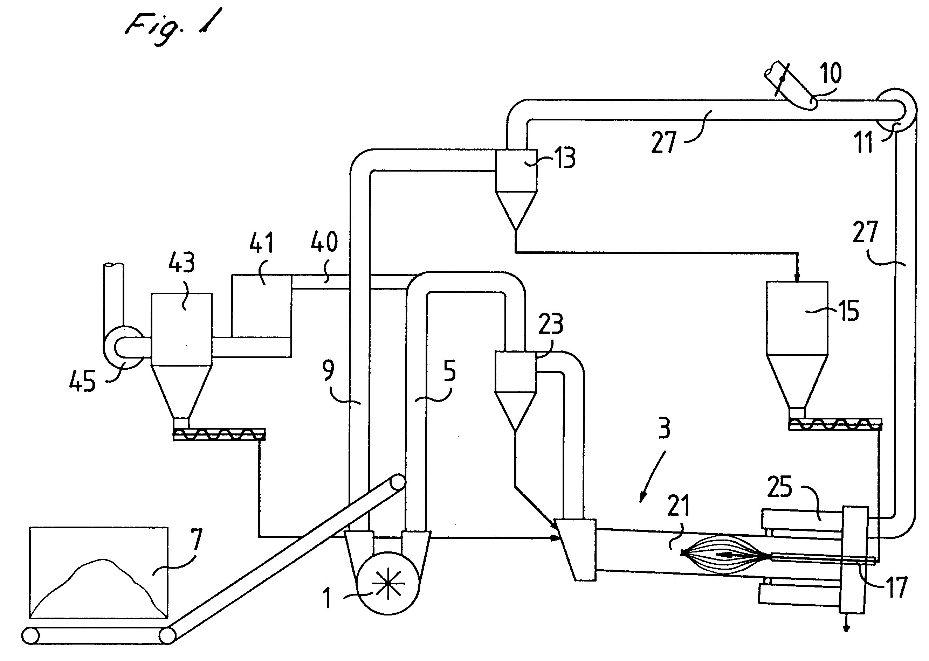

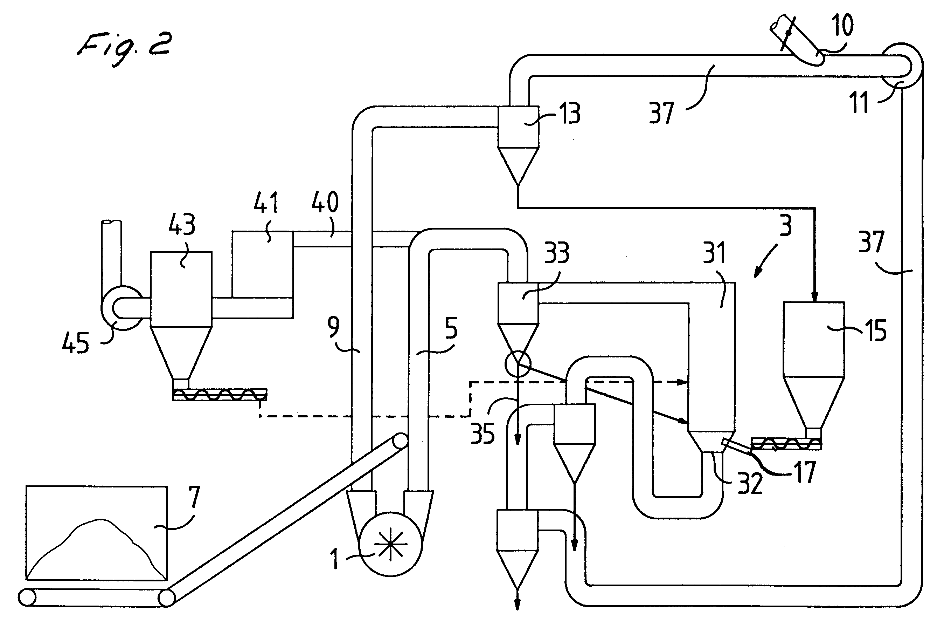

The plants shown in Fig. 1 and 2 both comprise a drying and comminuting apparatus in the form of a drier crusher 1 which through a duct 5 is supplied partly with hot exit gas from a kiln system 3 and partly a paper sludge, substantially dehydrated paper sludge, from a store 7. The dry and finely divided paper material is carried via a duct 9 and by means of a fan 11 suspended in the exit gas to a separation cyclone 13 in which the paper material is separated from the exit gas and directed to a storage vessel 15. The paper material is extracted from the storage vessel 15, possibly by means of a screw conveyor and is fired into the kiln system 3 of the plant via a burner 17.

In addition to the burner 17, the kiln system 3 of the plant shown in Fig. 1 comprises a rotary kiln 21, a dust cyclone 23 and a planetary cooler 25. The paper material is fired via the burner 17 into the rotary kiln 21 in such a way that a flame is formed herein. As a result, the organic matter of the material is incinerated with the development of heat, and a part of the mineral residue is precipitated in the kiln. The exit gas produced during incineration is conducted to the dust cyclone 23, in which the remaining amount of mineral dust is separated and returned to the rotary kiln 21. In the rotary kiln 21 the mineral material, by virtue of the rotation of the kiln and its inclination, is led backwards (i.e. in the direction opposite to that in which the flame is directed) below the flame, thus being subjected to heat treatment under controlled conditions, e.g. so that a maximum temperature of the material in the range 700 - 850°C is achieved. From the rotary kiln the heat-treated mineral material is conducted to the cooler 25 in which it is cooled in counterflow with the exit gas from the separation cyclone 13 which is supplied to the cooler 25 via a duct 27 and the fan 11. The product which is often nodulized into smaller and larger balls as a consequence of the motions in the rotary kiln must subsequently be subjected to some form of grinding in a grinding mill (not shown) prior to its final application.

In addition to the burner 17, the kiln system 3 of the plant shown in Fig. 2 comprises a calciner 31, a dust cyclone 33 and a cyclone cooler 35. The paper material is fired into the calciner 31 via the burner 17 which is situated near its bottom inlet 32 up through which hot combustion air is supplied from the cyclone preheater 35. As a result, the organic matter of the material is incinerated with the development of heat, by means of which the mineral residue is subjected to a heat treatment. The heat-treated mineral material is conducted suspended in the combustion gas to the dust cyclone 33 in which it is separated from the gas and directed to the cooler 35 in which it is cooled in counterflow with the exit gas from the separation cyclone 13, which is supplied to the cooler 35 via a duct 37 and the fan 11. In this type of plant the product is not allowed to nodulize, which is advantageous since this will eliminate the need for subsequent grinding. However, processing of the product must take place at a higher temperature, so that any CaCo₃ content in the material is decomposed into CaO and CO₂. Presence of the free CaO in the product will be acceptable if it quickly reacts to Ca(OH)₂ on contact with water. Since, in the vast majority of cases, slaking of lime burned in a calciner will quickly occur, as shown by experience, thereby avoiding the problems in terms of expansion damage in concrete otherwise encountered when the cement contains free CaO.

As it appears from both figures, the exit gas from the drier crusher 1 is recirculated by means of the fan 11 and substantially by means of fresh air supplied via a fresh-air intake 10 to the kiln system 3. In the kiln system 3 the recirculated exit gas is heated to a temperature of between 800 and 1000°C, which is sufficient to destroy any obnoxious and/or harmful substances.

Since, as previously mentioned, the plant will be heat-producing during normal operation, a partial stream 40 of the hot exit gas from the kiln system 3 may be extracted at a rate which is equivalent to the input of fresh air and is conducted to a plant 41 for waste heat utilization. Such a plant 41 may be designed for the production of steam or district heating water. From the plant 41 the now cooled exit gas is passed to a filter 43, such as a bag filter or an electrostatic precipitator, subsequently being vented to the atmosphere via a fan 45.

## Claims

1. A method for manufacturing a pozzolanic material from paper sludge in a plant comprising a drying and comminuting apparatus (1) and a kiln system (3), wherein the paper sludge is introduced into a stream of hot exit gas from the kiln system (3) of the plant and is passed together with the gas to the drying and comminuting apparatus (1) wherefrom dried and finely divided paper material is passed suspended in the exit gas to a separator (13) in which the paper material is separated from the exit gas; in that the separated, dry paper material is fed into a burning chamber (21, 31) of the kiln system (3) where the organic matter of the material is incinerated with the development of heat, by means of which the mineral residue is subjected to heat treatment for an appropriate period of time and at a controlled temperature of up to between 700 and 850°C; and in that the heat-treated mineral material is eventually cooled in a cooler (25, 35).

2. A method according to claim 1, wherein the dry paper material is conducted from the separator (13) to a storage vessel (15) from which it is extracted and fed into the burning chamber (21, 31) of the kiln system (3).

3. A method according to claim 1 or claim 2, wherein the dry paper material is fed via a burner installation (17) into a rotary kiln (21) forming the burning chamber of the kiln system where the organic matter of the material is incinerated to produce a flame; the mineral residue is precipitated in the rotary kiln (21); the exit gas produced during the incineration is passed to a dust separator (23) in which mineral dust is separated and returned to the rotary kiln (21), and the returned dust together with remaining mineral material in the rotary kiln is, by virtue of the rotation of the kiln, led along below the flame and thereby subjected to heat treatment under controlled conditions, the heat-treated mineral material being subsequently passed from the rotary kiln (21) to the cooler (25).

4. A method according to claim 1 or claim 2, wherein the dry paper material is fed into a calciner (31), forming the burning chamber of the kiln system, via a burner which is situated close to a bottom inlet (32) of the calciner up through which combustion air is supplied; the organic matter of the material being incinerated in the calciner with the development of heat, thereby subjecting the mineral residue to heat treatment; and the heat-treated mineral material suspended in the combustion gas is passed to a separator (33) in which it is separated from the gas and conducted to the cooler (35).

5. A method according to and one of the preceding claims, wherein the heat-treated mineral material is cooled by means of cooling air which is subsequently utilized as combustion air in the kiln system (3).

6. A method according to any one of the preceding claims, wherein the exit gas utilized for drying is recirculated via a fan (11) to the kiln system (3) of the plant in which, together with fresh air, it is first passed through the cooler (25, 35) in order to cool the material and then passed through the burning chamber (21, 31), whereby the unwanted substances in the exit gas are destroyed.

7. A method according to any one of the preceding claims, wherein a partial stream (40) of the hot exit gas from the kiln system (3) is extracted at a rate which is equivalent to an input of fresh air and conducted to a plant (41) for waste heat utilization.

8. A method according to claim 7, wherein the extracted exit gas is subsequently cleaned in a precipitator installation (43); and the dust from the precipitator (43) is returned to the kiln system (3), whereas the cleaned exit gas is vented to the atmosphere via a fan (45).

## Patentansprüche

1. Verfahren zum Herstellen eines Puzzolanmaterials aus Papierschlamm in einer ein Trocknungs- und Zerkleinerungsgerät (1) und ein Ofensystem (3) aufweisenden Anlage, bei dem der Papierschlamm in einen Strom heißer Abgase von dem Ofensystem (3) der Anlage eingeleitet und zusammen mit dem Gas zum Trocknungs- und Zerkleinerungsgerät (1) weitergeleitet wird, aus dem getrocknetes und fein zerkleinertes Papiermaterial in den Abgasen schwebend zu einer Trenneinrichtung (13) weitergeleitet wird, in der das Papiermaterial von den Abgasen getrennt wird, wobei das abgetrennte, trockene Papiermaterial in eine Brennkammer (21, 31) des Ofensystems (3) eingeleitet wird, wo die organischen Stoffe des Materials unter Entwicklung von Wärme verascht werden, mit der der mineralische Rest einer Wärmebehandlung geeigneter Dauer und bei einer kontrollierten Temperatur von bis zu zwischen 700 und 850°C unterzogen wird und das wärmebehandelte, mineralische Material schließlich in einer Kühleinrichtung (25, 35) gekühlt wird.

2. Verfahren nach Anspruch 1, bei dem das trockene Papiermaterial von der Trenneinrichtung (13) an ein Vorratsgefäß (15) weitergeleitet wird, aus dem es abgegeben und der Brennkammer (21, 31) des Ofensystems (3) zugeführt wird.

3. Verfahren nach Anspruch 1 oder Anspruch 2, bei dem das trockene Papiermaterial über einen Brennereinbau (17) in einem die Brennkammer des Ofensystems bildenden Drehofen (21) zugeführt wird, wo die organischen Stoffe des Materials zur Erzeugung einer Flamme verascht werden, der mineralische Rest im Drehofen (21) abgeschieden wird, die während der Veraschung erzeugten Abgase zu einer Staub-Trenneinrichtung (23) weitergeleitet werden, in der mineralischer Staub abgetrennt und zum Drehofen (21) zurückgeführt wird, und der zurückgeführte Staub zusammen mit dem im Drehofen verbliebenen mineralischen Material mit Hilfe der Drehung des Ofens unter die Flamme geleitet und dadurch einer Wärmebehandlung unter kontrollierten Bedingungen unterzogen wird, wobei das wärmebehandelte mineralische Material anschließend vom Drehofen (21) an die Kühleinrichtung (25) weitergeleitet wird.

4. Verfahren nach Anspruch 1 oder 2, bei dem das trockene Papiermaterial einem die Brennkammer des Ofensystems bildenden Kalzinierer (31) zugeführt wird, über einen Brenner, der in der Nähe eines Bodeneinlasses (32) des Kalzinierers angeordnet ist, durch den Verbrennungsluft zugeführt wird, wobei die organischen Stoffe des Materials in dem Kalzinierer verascht werden, und zwar unter Wärmeentwicklung, wodurch der mineralische Rest einer Wärmebehandlung unterzogen wird, und das in dem Verbrennungsgas schwebende, wärmebehandelte, mineralische Material zu einer Trenneinrichtung (33) weitergeleitet wird, in der es von dem Gas abgetrennt und der Kühleinrichtung (35) zugeführt wird.

5. Verfahren nach einem der vorhergehenden Ansprüche, bei dem das wärmebehandelte, mineralische Material mit Hilfe von Kühlluft gekühlt wird, die anschließend als Verbrennungsluft im Ofensystem (3) verwendet wird.

6. Verfahren nach einem der vorhergehenden Ansprüche, bei dem die zum Trocknen verwendeten Abgase über ein Gebläse (11) zum Ofensystem (3) der Anlage zurückgeführt werden, in dem sie zusammen mit Frischluft zunächst durch die Kühleinrichtung (25, 35) geleitet werden, um das Material zu kühlen, und dann durch die Brennkammer (21, 31) geleitet werden, wodurch unerwünschte Substanzen in den Abgasen zersetzt werden.

7. Verfahren nach einem der vorhergehenden Ansprüche, bei dem ein Teilstrom (40) heißer Abgase in einer der Zuführung von Frischluft entsprechenden Menge vom Ofensystem (3) abgeleitet und einer Anlage (41) zur Abwärmenutzung zugeführt wird.

8. Verfahren nach Anspruch 7, bei dem die abgeleiteten Abgase anschließend in einer Abscheidungseinrichtung (43) gereinigt werden und der Staub aus der Abscheidungseinrichtung (43) zum Ofensystem (3) zurückgeführt wird, während die gereinigten Abgase über ein Gebläse (45) an die Umgebung abgegeben werden.

## Revendications

1. Procédé de production d'un matériau pouzzolanique à partir d'une boue de papeterie dans une fabrique comprenant un appareil (1) de séchage et de pulvérisation et une installation de four (3), où la boue de papeterie est introduite dans un courant de gaz chaud d'échappement sortant de l'installation de four (3) de la fabrique et est introduite conjointement avec le gaz dans l'appareil (1) de séchage et de pulvérisation duquel du papier séché et finement divisé est transféré, en suspension dans le gaz d'échappement, à un séparateur (13) où le papier est séparé du gaz d'échappement ; dans lequel le papier sec séparé est chargé dans une chambre de comoustion (21, 31) de l'installation de four (3) où la matière organique du papier est incinérée en produisant de la chaleur au moyen de laquelle le résidu minéral est soumis à un traitement thermique pendant une durée appropriée et à une température réglée comprise entre 700 et 850°C ; et dans lequel la matière minérale traitée thermiquement est finalement refroidie dans un refroidisseur (25, 35).

2. Procédé suivant la revendication 1, dans lequel le papier sec est transféré du séparateur (13) à un récipient de stockage (15) duquel il est extrait et chargé dans la chambre de combustion (21, 31) de l'installation de four (3).

3. Procédé suivant la revendication 1 ou la revendication 2, dans lequel la matière sèche formée de papier est chargée, en passant par une installation de brûleur (17), dans un four rotatif (21) formant la chambre de combustion de l'installation de four où la matière organique du papier est incinérée en produisant une flamme ; le résidu minéral est précipité dans le four rotatif (21) ; le gaz d'échappement produit pendant l'incinération est envoyé à un dépoussiéreur (23) dans lequel la poussière minérale est séparée et recyclée au four rotatif (21), et la poussière recyclée, conjointement avec le reste de matière minérale dans le four rotatif, est amenée à passer sous la flamme en raison de la rotation du four et est ainsi soumise à un traitement thermique dans des conditions réglées, la matière minérale traitée thermiquement étant ensuite transférée du four rotatif (21) au refroidisseur (25).

4. Procédé suivant la revendication 1 ou la revendication 2, dans lequel la matière sèche formée de papier est chargée dans une zone de calcination (31) formant la chambre de combustion de l'installation de four, en passant par un brûleur qui est situé à proximité d'une lumière d'admission (32) à la base de la zone de calcination, que traverse en montant un courant d'alimentation en air de combustion ; la matière organique du papier étant incinérée dans la zone de calcination avec production de chaleur, en soumettant ainsi le résidu minéral au traitement thermique ; et la matière minérale traitée thermiquement en suspension dans le gaz de combustion est transférée à un séparateur (33) dans lequel elle est séparée du gaz et envoyée au refroidisseur (35).

5. Procédé suivant l'une quelconque des revendications précédentes, dans lequel la matière minérale traitée thermiquement est refroidie au moyen d'air de refroidissement qui est ensuite exploité comme air de combustion dans l'installation de four (3).

6. Procédé suivant l'une quelconque des revendications précédentes, dans lequel le gaz d'échappement utilisé pour le séchage est recyclé par l'intermédiaire d'un ventilateur (11) dans l'installation de four (3) de la fabrique dans laquelle, conjointement avec de l'air frais, il est tout d'abord amené à passer dans le refroidisseur (25,35) en vue de refroidir la matière, puis amené à passer dans la chambre de combustion (21, 31) de manière à détruire les substances indésirables contenues dans le gaz d'échappement.

7. Procédé suivant l'une quelconque des revendications précédentes, dans lequel un courant partiel (40) du gaz chaud d'échappement sortant de l'installation de four (3) est extrait à une vitesse qui équivaut à une admission d'air frais et est envoyé à une installation (41) en vue de la récupération de la chaleur perdue.

8. Procédé suivant la revendication 7, dans lequel le gaz d'échappement extrait est ensuite épuré dans une installation (43) de précipitation ; et la poussière sortant de l'installation (43) de précipitation est renvoyée à l'installation de four (3) tandis que le gaz d'échappement épuré est rejeté à l'atmosphère en passant par un ventilateur (45).
